# EUROPÄISCHE PATENTSCHRIFT

(11) **EP 1 060 946 B1**
(45) Veröffentlichungstag und Bekanntmachung des Hinweises auf die Patenterteilung: **03.05.2006**
(21) Anmeldenummer: 00111130.1
(22) Anmeldetag: 24.05.2000
(51) Int. Cl.: B60Q 1/14

(54) **Lenkstockschaltermodul**
Steering column assembly
Ensemble de colonne de direction

(30) Priorität: 16.06.1999 DE 19927542
(43) Veröffentlichungstag der Anmeldung: 20.12.2000
(73) Patentinhaber: Valeo Schalter und Sensoren GmbH, 74321 Bietigheim-Bissingen (DE)
(72) Erfinder: Simonis, Karl, 74366 Kirchheim a.N. (DE); Hecht, Walter, 74321 Bietigheim-Bissingen (DE); Kofink, Peter, 74379 Ingersheim (DE); Wilsser, Jens-Uwe, 74321 Bietigheim-Bissingen (DE)
(74) Vertreter: Dreiss, Fuhlendorf, Steimle & Becker

(56) Entgegenhaltungen:
- DE-A- 3 532 532
- DE-A- 19 525 138
- DE-A- 19 631 305
- DE-A- 19 642 616
- DE-A- 19 711 561

## Beschreibung

Die Erfindung betrifft ein Lenkstockschaltermodul gemäß dem Oberbegriff des Anspruhs 1, wie z.B. aus DE-A-195 25 138 bekannt ist.

Lenkstockschalter sind hinreichend bekannt. In diesen Lenkstockschaltern sind die Schalter zum Betätigen des Blinkers, des Scheibenwischers, gegebenenfalls eines Tempomats und dergleichen vorgesehen. Dieser Lenkstockschalter befindet sich am oberen Ende einer Lenksäule unmittelbar unterhalb des Lenkrades. Außerdem ist bekannt, dass in diesem Bereich auch ein Lenkwinkelsensor vorgesehen ist, über welchen die Stellung des Lenkrades ermittelbar ist. Um die elektrischen Signale z.B. an einen im Lenkrad vorgesehenen Airbag, im Lenkrad vorgesehene Sensoren oder Schalter, an eine Lenkradheizung usw. zu übertragen, ist außerdem eine flexible Leiterbahn vorgesehen, welche ebenfalls im oberen Bereich der Lenksäule sich befindet. Schließlich ist in diesem Bereich auch das Zündschloss vorgesehen, über welches die Lenksäule bei abgezogenem Zündschlüssel verriegelt wird. Anstelle dieser mechanischen Verriegelung über einen Zündschlüssel ist auch eine elektrische Verriegelung z.B. mittels Elektromotoren bekannt, wobei diese elektrische Lenksäulenverriegelung am unteren Ende der Lenksäule vorgesehen ist. Als nachteilig bei diesem Stand der Technik wird angesehen, dass bei der Montage eine Vielzahl von Baueinheiten gehandhabt und separat montiert werden müssen.

Dieses Problem wird erfindungsgemäß dadurch vermieden, dass in das Lenkstockschaltermodul der eingangs genannten Art als weiterer, vierter Modulabschnitt eine Lenksäulenverriegelung integriert ist und dass das Lenkstockschaltermodul über die Lenksäulenverriegelung an einer Lenksäule, insbesondere an dessen Mantelrohr befestigbar ist.

Die erfindungsgemäße Ausgestaltung des Lenkstockschaltermoduls sieht also vor, dass das Modul selbst über die Lenksäulenverriegelung an der Lenksäule befestigt wird. Der erste, zweite und dritte Modulabschnitt hängen also am vierten Modulabschnitt, nämlich an der Lenksäulenverriegelung, und werden über diese am Fahrzeug, nämlich der Lenksäule fixiert. Es bedarf keiner separaten Befestigungsmittel für diese drei Modulabschnitte, sodass diese einfacher ausgestaltet werden können. Außerdem ist die Montage wesentlich vereinfacht, da lediglich ein einziges Bauteil am Fahrzeug fixiert werden muss.

Ein weiterer Vorteil wird darin gesehen, dass an diesen drei Modulabschnitten, nämlich am Lenkstockschalter, am Lenkwinkelsensor sowie am dritten Modulabschnitt mit der flexiblen Leiterbahn sowohl eine elektrische Lenksäulenverriegelung als auch eine mechanische Lenksäulenverriegelung mit Zündschloss befestigbar sind. Somit ist das Lenkstockschaltermodul universal verwendbar, nämlich für Fahrzeuge mit elektrischer als auch für Fahrzeuge mit mechanischer Lenksäulenverriegelung. Bei Fahrzeugen, bei denen die Lenksäule elektrisch verriegelt wird, ist diese Lenksäulenverriegelung nicht mehr am unteren Ende der Lenksäule sondern erfindungsgemäß im Bereich des Lenkstockschalters, nämlich integriert in das Lenkstockschaltermodul am oberen Ende der Lenksäule vorgesehen. Diese Lenksäulenverriegelung ist nunmehr starr mit der Lenksäule, nämlich mit dem Mantelrohr verbunden und trägt die anderen Modulabschnitte, die über eine oder mehrere Schrauben mit der Lenksäulenverriegelung verbunden sind. Die Schrauben durchgreifen vorteilhaft alle Modulabschnitte und sind in die Lenksäulenverriegelung eingeschraubt. Vorzugsweise werden über die Schrauben auch die Abdeckkappen, mit welchen das Lenkstockschaltermodul verkleidet wird, befestigt.

Um das Lenkstockschaltermodul vor der Fixierung am Fahrzeug einfach handhaben zu können und um zu gewährleisten, dass das Lenkstockschaltermodul, obwohl es aus mehreren Modulabschnitten besteht, als separat handhabbare Einheit verwendbar ist, sind die einzelnen Modulabschnitte miteinander verrastet oder verclipst. Nicht nur das Handling auch die Lagerhaltung und der Funktionstest vor dem Einbau werden auf diese Weise wesentlich vereinfacht.

Die Befestigung der einzelnen Modulabschnitte untereinander erfolgt über eine oder über mehrere parallel zueinander liegende Schrauben, mit denen die Module an der Lenksäulenverriegelung, d.h. am vierten Modulabschnitt angeschraubt werden. Diese Schrauben sind als Zentralschrauben ausgebildet und verbinden wenigstens zwei Modulabschnitte miteinander, insbesondere verbinden sie alle Modulabschnitte miteinander.

Erfindungsgemäß weist der erste, zweite und/oder der dritte Modulabschnitt zumindest einen Teil der Elektronik der Lenksäulenverriegelung auf. Vorzugsweise ist die gesamte Elektronik zu einer Einheit zusammengefasst und befindet sich im Modulabschnitt für den Lenkwinkelsensor. Außerhalb dieses Modulabschnitts sind lediglich noch Schalter, Antennen o. dgl. vorgesehen. Diese Integration der gesamten Elektronik in einen einzigen Modulabschnitt hat den wesentlichen Vorteil, dass die Baugröße verkleinert und aufgrund der Integration der Elektronik in ein einziges Bauteil die Diagnostik vereinfacht wird.

Der vierte Modulabschnitt ist mit einem Steckerteil versehen, über welches er mit einem oder mit mehreren der anderen Modulabschnitte elektrisch verbindbar ist. Über dieses Steckerteil werden die Signale aus der Lenksäulenverriegelung bzw. in die Lenksäulenverriegelung übertragen, ohne dass hierzu eine Verkabelung erforderlich ist. Dieses Steckerteil befindet sich innerhalb einer Aufnahmekammer, die an einem oder an mehreren der Modulabschnitten vorgesehen ist. Die Aufnahmekammer sichert das Steckerteil außerdem vor einem mechanischen Eingriff, insbesondere vor Manipulationen.

Eine Weiterbildung sieht vor, dass nur eine elektrische Schnittstelle vorgesehen ist, die sich insbesondere am zweiten Modulabschnitt befindet. Eine einzige Schnittstelle hat den Vorteil, dass lediglich ein einziges Steckelement für die elektrische Verbindung des Lenkstockschaltermoduls mit dem Fahrzeug erforderlich ist.

Weitere Vorteile, Merkmale und Einzelheiten der Erfindung ergeben sich aus den Unteransprüchen sowie der nachfolgenden Beschreibung, in der unter Bezugnahme auf die Zeichnung zwei besonders bevorzugte Ausführungsbeispiele im Einzelnen beschrieben sind. Dabei können die in der Zeichnung dargestellten sowie in der Beschreibung und in den Ansprüchen erwähnten Merkmale jeweils einzeln oder in beliebiger Kombination erfindungswesentlich sein. In der Zeichnung zeigen:
- Fig. 1: eine Explosionsdarstellung einer ersten Ausführungsform eines Lenkstockschaltermoduls gemäß der Erfindung;
- Fig. 2: eine perspektivische Darstellung des Lenkstockschaltermoduls der Fig. 1 in zusammengebautem Zustand; und
- Fig. 3: eine perspektivische Ansicht einer zweiten Ausführungsform des erfindungsgemäßen Lenkstockschatermoduls.

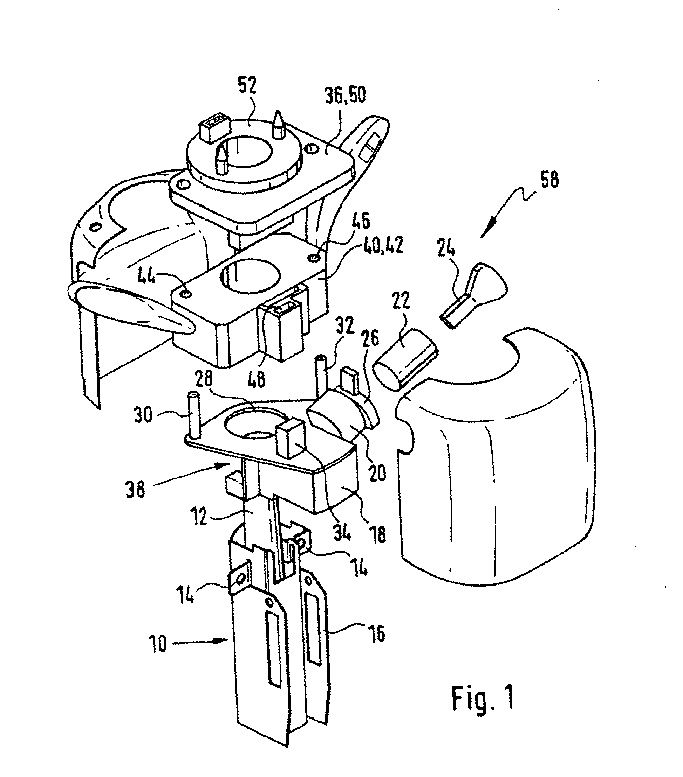

In der Figur 1 ist mit dem Bezugszeichen 10 das obere Ende eines Mantelrohrs 10 für eine Lenksäule 12 dargestellt. Am Mantelrohr 10 befinden sich radial abstehende Laschen 14 sowie weitere Befestigungsvorrichtungen 16 in Form von Blechen mit Aufnahmeöffnungen und Schlitzen, an welchen eine Lenksäulenverriegelung 18 befestigt, insbesondere angeschraubt werden kann. Die Lenksäulenverriegelung 18, welche in Figur 1 dargestellt ist, weist einen integrierten Elektromotor (nicht dargestellt) auf, mit welchem eine Verriegelungseinrichtung betätigt und die Lenksäule 12 verriegelt werden kann. Die Lenksäulenverriegelung 18 weist einen Zylinder 20 auf, welcher einen Sensor 22 aufnimmt, über den ein für das Fahrzeug individualisierter Code an einem Codeträger 24 abgetastet werden kann. Der Codeträger 24 weist die Form eines Schlüssels auf, wobei er jedoch keine mechanischen, einem herkömmlichen Schlüssel entsprechende Formgebungen aufweist. Um den Zylinder 20 herum ist eine Antenne 26 angeordnet, welche ebenfalls als Sensor für einen im Codeträger 24 vorgesehenen Code dient.

Die Lenksäulenverriegelung 18 weist eine zentrale Öffnung 28 auf, mit welcher sie die Lenksäule 12 umgreift. Außerdem ist sie mit zwei Domen 30 und 32 versehen, die vertikal nach oben abragen. Schließlich befindet sich an der Oberseite der Lenksäulenverriegelung 18 ein Steckerteil 34, über welches die Lenksäulenverriegelung 18 mit einem Lenkwinkelsensor 36 elektrisch verbindbar ist.

Auf die Lenksäulenverriegelung 18, welche einen vierten Modulabschnitt 38 darstellt, wird ein Lenkstockschalter 40, der einen ersten Modulabschnitt 42 bildet, derart aufgesetzt, dass die Dome 30 und 32 korrespondierende Öffnungen 44 und 46 durchgreifen und dass das Steckerteil 34 durch eine Aufnahmekammer 48 am ersten Modulabschnitt 42 hindurchragt. Der erste Modulabschnitt 42 ist mit dem vierten Modulabschnitt 38 über nicht dargesellte Mittel verclipsbar bzw. verrastbar.

Auf den ersten Modulabschnitt 42 sind ein zweiter Modulabschnitt 50 und ein dritter Modulabschnitt 52 aufsetzbar und mit diesem verclipsbar, wobei der zweite Modulabschnitt 50 den Lenkwinkelsensor 36 darstellt und der dritte Modulabschnitt 52 eine (nicht dargestellte) flexible Leiterbahn enthält. Das Steckerteil 34 ist in den zweiten Modulabschnitt 50 einsteckbar.

Über (nicht dargestellte) Schrauben sind die einzelnen Modulabschnitte 52, 50, 42 und 38 miteinander verbindbar, wobei die Schrauben in die Dome 30 und 32 eingeschraubt werden. Dabei können gleichzeitig Abdeckkappen 54 und 56, die als Verkleidung dienen, festgeschraubt werden. Vor der Befestigung der Lenksäulenverriegelung 18 am Mantelrohr 10 bilden die Modulabschnitte 52, 50, 42 und 38 ein Lenkstockschaltermodul 58 als separat handhabbare Einheit. Das Lenkstockschaltermodul 58 ist als Ganzes auf Funktionalität prüfbar.

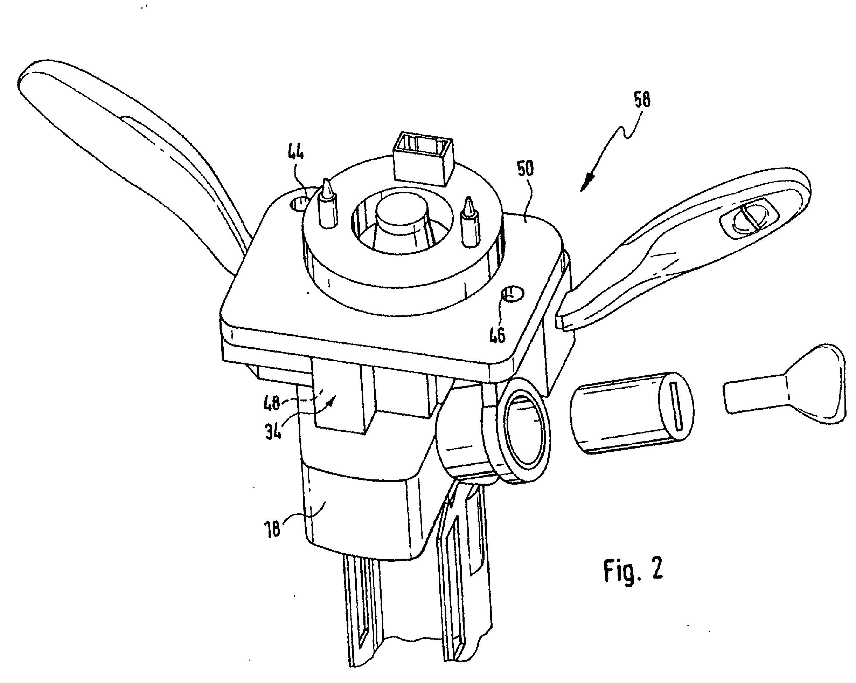

Wie aus Figur 2 ersichtlich, muss das Lenkstockschaltermodul 58 lediglich mit dem entsprechenden Sensor 22 bestückt werden, sodass es auf das betreffende Fahrzeug individualisiert ist. Das in der Figur 2 dargestellte Lenkstockschaltermodul 58 ist mit einer elektrischen Lenksäulenverriegelung 18 über die die Öffnung 44 und 46 durchgreifenden Schrauben verbunden. Das Steckerteil 34 befindet sich innerhalb der Kammer 48 und ist vor gewaltsamen mechanischen Eingriffen gesichert. Innerhalb des zweiten Modulabschnitts 50 befindet sich die gesamte Elektronik des Lenkstockschaltermoduls 58, wobei der zweite Modulabschnitt 50 mit der einzigen Schnittstelle des gesamten Lenkstockschaltermoduls 58 versehen ist, an welchen ein einziger Modulstecker angeschlossen wird, um das Lenkstockschaltermodul mit dem Bordnetz des Fahrzeugs zu verbinden. Hierdurch wird der Kabelsatz des Fahrzeugs wesentlich verringert.

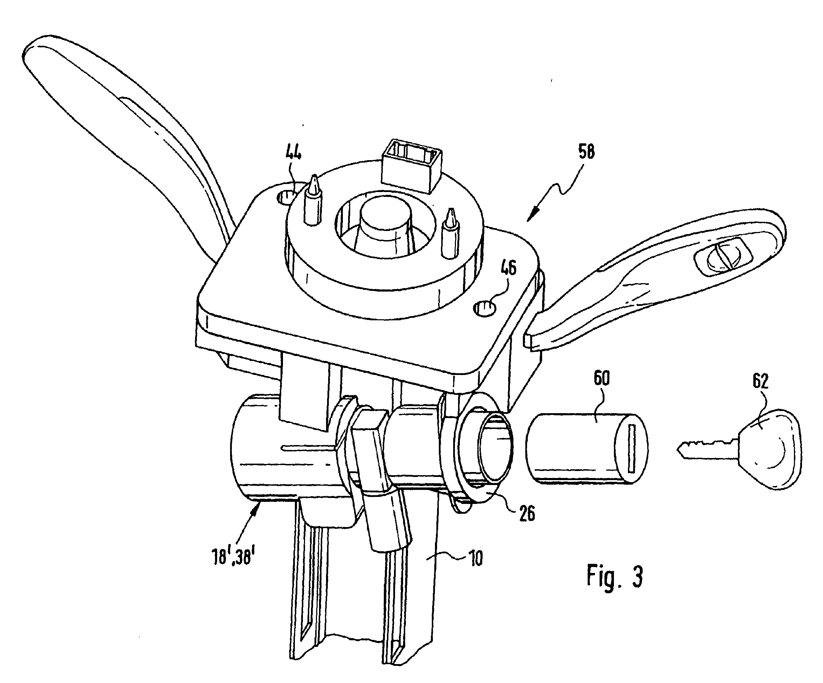

Die Figur 3 zeigt ein zweites Ausführungsbeispiel der Erfindung, bei welchem das Lenkstockschaltermodul 58 mit einer mechanischen Lenksäulenverriegelung 18' versehen ist. Diese als vierter Modulabschnitt 38' ausgebildete mechanische Lenksäulenverriegelung 18' ist so ausgestaltet, dass der erste Modulabschnitt 42 über die die Öffnungen 44 und 46 durchgreifenden Schrauben daran fixierbar ist. Auf diese Weise werden die Modulabschnitte 42, 50 und 52 ebenfalls am vierten Modulabschnitt 38' fixiert, sodass ein als separat handhabbares Bauteil ausgebildetes Lenkstockschaltermodul 58 entsteht, welches über den vierten Modulabschnitt 38' am oberen Ende des Mantelrohrs 10 befestigt wird. In die Lenksäulenverriegelung 18' ist ein Schließzylinder 60 eines herkömmlichen Schlosses integriert, welcher über einen herkömmlichen Schlüssel 62 betätigt wird. Dieser Schlüssel 62 kann zudem einen Code für eine Antenne 26 (Transponderspule) tragen.

Insgesamt kann festgehalten werden, dass die Modulabschnitte 42, 50 und 52 gleichermaßen an einer elektrischen Lenksäulenverriegelung 18 als auch an einer mechanischen Lenksäulenverriegelung 18' befestigt und mit dieser zu einer Einheit verbunden werden können, wobei die Einheit als Lenkstockschaltermodul 58 am Mantelrohr 10 fixiert wird.

## Patentansprüche

1. Lenkstockschaltermodul (58) mit einem den oder die Lenkstockschalter (40) aufnehmenden ersten Modulabschnitt (42), einem eine Modulelektronik, gegebenenfalls mit einem integrierten Lenkwinkelsensor (36) beinhaltenden zweiten Modulabschnitt (50) und einem eine flexible Leiterbahn beinhaltenden dritten Modulabschnitt (52), wobei als weiterer, vierter Modulabschnitt (38) eine Lenksäulenverriegelung (18, 18') integriert ist, **dadurch gekennzeichnet dass** das Lenkstockschaltermodul (58) über die Lenksäulenverriegelung (18, 18') an einer Lenksäule (12), insbesondere an dessen Mantelrohr (10) befestigbar ist, dass der vierte Modulabschnitt (38) mit einem Steckerteil (34) versehen ist, über welchen er mit einem oder mehreren der anderen Modulabschnitte (42, 50, 52) elektrisch verbindbar ist, wobei der Steckerteil (34) sich innerhalb einer Aufnahmekammer (48) befindet, und die Aufnahmekammer (48) das Steckerteil (34) vor mechanischem Eingriff sichert.

2. Lenkstockschaltermodul nach Anspruch 1, **dadurch gekennzeichnet, dass** die Lenksäulenverriegelung (18) eine elektrische Lenksäulenverriegelung ist.

3. Lenkstockschaltermodul nach Anspruch 1, **dadurch gekennzeichnet, dass** die Lenksäulenverriegelung (18') eine mechanische Lenksäulenverriegelung ist.

4. Lenkstockschaltermodul nach einem der vorhergehenden Ansprüche, **dadurch gekennzeichnet, dass** mindestens zwei der Modulabschnitte (38, 42, 50, 52) miteinander verclipsbar sind.

5. Lenkstockschaltermodul nach einem der vorhergehenden Ansprüche, **dadurch gekennzeichnet, dass** die Modulabschnitte (38, 42, 50, 52) über eine oder mehrere, parallel zueinander liegende Schrauben miteinander verschraubt sind.

6. Lenkstockschaltermodul nach einem der vorhergehenden Ansprüche, **dadurch gekennzeichnet, dass** der erste, zweite und/oder der dritte Modulabschnitt (42, 50, 52) zumindest einen Teil der Elektronik der Lenksäulenverriegelung (18, 18') aufweist.

7. Lenkstockschaltermodul nach einem der vorhergehenden Ansprüche, **dadurch gekennzeichnet, dass** der zweite Modulabschnitt (50) mit wenigstens einer Platine versehen ist und die Platine die elektronischen Bauelemente des Lenkstockschaltermoduls (58) aufweist.

8. Lenkstockschaltermodul nach einem der vorhergehenden Ansprüche, **dadurch gekennzeichnet, dass** die Aufnahmekammer (48) an einem oder mehreren Modulabschnitten (38, 42, 50, 52) vorgesehen ist.

9. Lenkstockschaltermodul nach einem der vorhergehenden Ansprüche, **dadurch gekennzeichnet, dass** es nur eine elektrische Schnittstelle aufweist, die insbesondere am zweiten Modulabschnitt (50) vorgesehen ist.

10. Lenkstockschaltermodul nach einem der vorhergehenden Ansprüche, **dadurch gekennzeichnet, dass** es als separat handhabbare Einheit ausgebildet ist, die vor dem Einbau kontrollierbar ist.

## Claims

1. Steering column switch module (58) having a first module section (42) accommodating the steering column switch or switches (40), a second module section (50) containing module electronics and possibly with an integrated steering angle sensor (36), and a third module section (52) containing a flexible conductor track, whereby a steering column locking mechanism (18, 18') is integrated as a further, fourth module section (38), **characterised in that** the steering column switch module (58) is fixable via the steering column locking mechanism (18, 18') to a steering column (12), in particular to its outer tube (10), that the fourth module section (38) is provided with a plug member (34), by means of which it is electrically connectable to one or more of the other module sections (42, 50, 52), whereby the plug member (34) is arranged inside a receptacle chamber (48) and the receptacle chamber (48) protects the plug member (34) against mechanical intervention.

2. Steering column switch module according to claim 1, **characterised in that** the steering column locking mechanism (18) is an electric steering column locking mechanism.

3. Steering column switch module according to claim 1, **characterised in that** the steering column locking mechanism (18') is a mechanical steering column locking mechanism.

4. Steering column switch module according to one of the preceding claims, **characterised in that** at least two of the module sections (38, 42, 50, 52) may be clipped together.

5. Steering column switch module according to one of the preceding claims, **characterised in that** the module sections (38, 42, 50, 52) are screwed by means of one or more screws lying parallel to each other.

6. Steering column switch module according to one of the preceding claims, **characterised in that** the first, second and/or third module section (42, 50, 52) has at least part of the electronics of the steering column locking mechanism (18, 18').

7. Steering column switch module according to one of the preceding claims, **characterised in that** the second module section (50) is provided with at least one circuit board and the circuit board has the electronic components of the steering column switch module (58).

8. Steering column switch module according to one of the preceding claims, **characterised in that** the receptacle chamber (48) is provided on one or more of the module sections (38, 42, 50, 52).

9. Steering column switch module according to one of the preceding claims, **characterised in that** it has only one electrical interface, which in particular is provided on the second module section (50).

10. Steering column switch module according to one of the preceding claims, **characterised in that** it is designed as a unit capable of being separately handled and which can be checked before installation.

## Revendications

1. Module de commutation fixé à la colonne de direction (58) ayant une première section de module (42) logeant le ou les commutateurs fixés à la colonne de direction (40), une deuxième section de module (50) contenant une électronique de module, le cas échéant, avec un capteur intégré d'angle de direction (36), et une troisième section de module (52) contenant une piste conductive flexible, un verrouillage de colonne de direction (18, 18') étant intégré en tant que quatrième section de module (38) supplémentaire, **caractérisé en ce que** le module de commutation fixé à la colonne de direction (58) peut être fixé à une colonne de direction (12), en particulier à son tube de protection (10), par le biais du verrouillage de colonne de direction (18, 18'), et **en ce que** la quatrième section du module (38) est munie d'une partie de fiche (34) au moyen de laquelle elle peut être reliée électriquement à l'une ou plusieurs des autres sections du module (42, 50, 52), la partie de fiche (34) se trouvant à l'intérieur d'un compartiment de logement (48) et le compartiment de logement (48) protégeant la partie de fiche (34) contre une attaque mécanique.

2. Module de commutation fixé à la colonne de direction selon la revendication 1, **caractérisé en ce que** le verrouillage de colonne de direction (18) est un verrouillage électrique de la colonne de direction.

3. Module de commutation fixé à la colonne de direction selon la revendication 1, **caractérisé en ce que** le verrouillage de colonne de direction (18') est un verrouillage mécanique de la colonne de direction.

4. Module de commutation fixé à la colonne de direction selon l'une quelconque des revendications précédentes, **caractérisé en ce qu'**au moins deux des sections du module (38, 42, 50, 52) peuvent être clipsées l'une à l'autre.

5. Module de commutation fixé à la colonne de direction selon l'une quelconque des revendications précédentes, **caractérisé en ce que** les sections du module (38, 42, 50, 52) sont vissées l'une à l'autre au moyen d'une ou de plusieurs vis situées parallèlement l'une à l'autre.

6. Module de commutation fixé à la colonne de direction selon l'une quelconque des revendications précédentes, **caractérisé en ce que** la première, la deuxième et/ou la troisième section du module (42, 50, 52) présente au moins une partie de l'électronique du verrouillage de la colonne de direction (18, 18').

7. Module de commutation fixé à la colonne de direction selon l'une quelconque des revendications précédentes, **caractérisé en ce que** la deuxième section du module (50) est munie d'au moins un disque et **en ce que** le disque présente les composants électroniques du module de commutation fixé à la colonne de direction (58).

8. Module de commutation fixé à la colonne de direction selon l'une quelconque des revendications précédentes, **caractérisé en ce que** le compartiment de logement (48) est prévu sur une ou plusieurs sections du module (38, 42, 50, 52).

9. Module de commutation fixé à la colonne de direction selon l'une quelconque des revendications précédentes, **caractérisé en ce qu'**il présente seulement une interface électrique, qui est prévue en particulier sur la deuxième section du module (50).

10. Module de commutation fixé à la colonne de direction selon l'une quelconque des revendications précédentes, **caractérisé en ce qu'**il est réalisé en tant qu'unité pouvant être manipulée séparément, qui peut être contrôlée avant le montage.
